# EUROPÄISCHE PATENTANMELDUNG

(11) **EP 1 983 205 A1**
(43) Veröffentlichungstag der Anmeldung: **22.10.2008**
(21) Anmeldenummer: 08005264.0
(22) Anmeldetag: 20.03.2008
(51) Int. Cl.: F16D 3/12, F16D 3/52, F16F 15/121

(54) **Lüfterantriebs-Übertragungseinrichtung**

(30) Priorität: 21.04.2007 DE 102007019003
(71) Anmelder: ZF Friedrichshafen AG, 88038 Friedrichshafen (DE)
(72) Erfinder: Wickel, Christian, 97797 Wartmannsroth (DE)

(57) **Zusammenfassung**

Eine Lüfterantriebs-Übertragungseinrichtung für einen Lüfter in einem Kraftfahrzeug ist an einem Kupplungsträger aufgenommen und weist eine als Eingang dienende Riemenscheibe zur Aufnahme eines von einem Antrieb gelieferten Drehmomentes sowie einen als Ausgang zum Lüfter dienenden Wellenadapter auf. Dem Eingang ist ein antriebsseitiges Übertragungselement und dem Ausgang ein abtriebsseitiges Übertragungselement zugeordnet, die über eine Dämpfungseinrichtung miteinander in Wirkverbindung stehen, wobei der Dämpfungseinrichtung zumindest ein Energiespeicher und wenigstens ein Anschlagelement, das mit einem jeweils zugeordneten Verdrehanschlag zusammenwirkt, zugewiesen sind. Der Energiespeicher ist bis zum Erreichen eines vorbestimmten Drehmomentes für eine Übertragung eines vom Antrieb gelieferten Drehmomentes zwischen den Übertragungselementen vorgesehen, während bei Überschreitung dieses vorbestimmten Drehmomentes mittels der Verdrehanschläge eine Überbrückung des Energiespeichers und damit eine elastizitätsfreie Verbindung der Übertragungselemente untereinander ausgelöst wird.

## Beschreibung

Die Erfindung bezieht sich auf eine Lüfterantriebs-Übertragungseinrichtung entsprechend dem Oberbegriff des Anspruches 1.

Derartige Lüfterantriebs-Übertragungseinrichtungen finden insbesondere bei Kraftfahrzeugen aus dem Nutzfahrzeugbereich Anwendung. Üblicherweise ist eine derartige Lüfterantriebs-Übertragungseinrichtung an einem Trägerarm aufgenommen und verfügt über eine Riemenscheibe, über welche sie mittels eines Riementriebes mit einer Kurbelwelle einer Brennkraftmaschine des Kraftfahrzeugs in Drehverbindung steht. Durch den Riementrieb in Drehung versetzt, steht die Lüfterantriebs-Übertragungseinrichtung in Drehverbindung mit einer Lüfterkupplung, welche in Abhängigkeit von ihrer jeweiligen Ansteuerung das von der Lüfterantriebs-Übertragungseinrichtung angelieferte Drehmoment entweder in vollem Umfang an einen der Lüfterkupplung zugeordneten Lüfter überträgt, oder aber lediglich einen Teil des von der Lüfterantriebs-Übertragungseinrichtung stammenden Drehmomentes an den Lüfter abgibt. Auf diese Weise kann entsprechend des Kühlungsbedarfs der Brennkraftmaschine die Kühlwirkung reguliert werden, so dass dann, wenn keine Kühlwirkung oder lediglich eine geringe Kühlwirkung erforderlich ist, der Lüfter im wesentlichen nur mitgeschleppt wird, ohne ihn zur Kühlungsbeaufschlagung eines zugeordneten Kühlers anzutreiben. Auf diese Weise wird Energie eingespart und damit der Wirkungsgrad der Brennkraftmaschine verbessert.

Solange die Drehbewegung der Lüfterantriebs-Übertragungseinrichtung zumindest im Wesentlichen einen Antrieb des Lüfters bewirkt, wirken sich eventuelle Torsionsschwingungen an der Kurbelwelle nur in vernachlässigbarer Weise aus. Bei Betriebszuständen, in denen lediglich eine geringe Kühlwirkung oder aber keine Kühlwirkung benötigt wird, und der Lüfter daher lediglich bedingt durch Schleppverluste in der Lüfterkupplung antriebslos mitgeschleppt wird, wirken sich dagegen Torsionsschwingungen der Kurbelwelle extrem nachteilig aus.

Es soll nachgetragen werden, dass der die Lüfterantriebs-Übertragungseinrichtung üblicherweise aufnehmende Trägerarm in Achsrichtung verstellbar ist, und dadurch die Möglichkeit bietet, den Abstand der Lüfterantriebs-Übertragungseinrichtung von der Kurbelwelle der Brennkraftmaschine zu verändern. Auf diese Weise kann der zwischen der Lüfterantriebs-Übertragungseinrichtung und der Kurbelwelle verlaufende Riementrieb problemlos gespannt werden.

Der Erfindung liegt. die Aufgabe zugrunde, eine Lüfterantriebs-Übertragungseinrichtung derart auszubilden, dass Torsionsschwingungen eines eine Drehbewegung erzeugenden Antriebes zumindest reduziert an eine einen Lüfter aufweisende Lüfterkupplung übertragen werden.

Diese Aufgabe wird durch die Merkmale des Anspruches 1 gelöst.

Durch Ausbildung der Lüfterantriebs-Übertragungseinrichtung mit einem antriebsseitigen Übertragungselement und einem konzentrisch zu demselben angeordneten abtriebsseitigen Übertragungselement, welches über eine Dämpfungseinrichtung mit dem antriebsseitigen Übertragungselement wirkverbunden ist, wird die Möglichkeit geschaffen, von einem Antrieb, wie beispielsweise der Kurbelwelle einer Brennkraftmaschine, über den Riementrieb zusammen mit dem eingeleiteten Drehmoment angelieferte Torsionsschwingungen zumindest betragsmäßig deutlich zu reduzieren, bevor eine Übertragung des Drehmomentes vom abtriebsseitigen Übertragungselement der Lüfterantriebs-Übertragungseinrichtung auf eine Lüfterkupplung erfolgt, welche zum Antrieb eines Lüfters dient.

Für Betriebszustände, in denen die Lüfterfunktion des Lüfters nur unwesentlich oder gar nicht benötigt wird, macht sich die in der Lüfterantriebs-Übertragungseinrichtung erfolgende Torsionsschwingungsdämpfung sehr deutlich bemerkbar, indem der Lüfter zwar nach wie vor zumindest im wesentlichen antriebslos mitgeschleppt wird, hierbei aber praktisch keine unerwünschte Beschleunigung oder Verzögerung, bedingt durch eingeleitete Torsionsschwingungen, erfährt. Dies macht sich nicht nur in einem ruhigeren Lauf der Gesamtanordnung positiv bemerkbar, es schont darüber hinaus auch belastete Bauteile, wie beispielsweise Lagerstellen in der Lüfterkupplung.

Um eine hervorragende Torsionsschwingungsdämpfung in der Lüfterantriebs-Übertragungseinrichtung zu erzielen, verfügt deren Dämpfungseinrichtung zugunsten einer hohen Entkupplungsgüte über zumindest einen Energiespeicher, der große Verformungswege bereitstellen kann. Gleichzeitig soll dieser Energiespeicher mit einer geringen, reibungsbedingten Dämpfungswirkung beaufschlagt sein, was ebenfalls zu einer Steigerung der Entkopplungsgüte beiträgt. Mit Vorzug ist der zumindest eine Energiespeicher der Dämpfungseinrichtung daher durch eine Spiralfeder gebildet, bei welcher vorzugsweise darauf zu achten ist, dass die einzelnen Federwindungen nicht in Reibkontakt miteinander gelangen.

Durch Anbindung eines Federendes der Spiralfeder an das antriebsseitige Übertragungselement und des anderen Federendes der Spiralfeder an das abtriebsseitige Übertragungselement steht bis zur Einleitung eines durch die Federauslegung bemessenen, geringen vorbestimmten Momentenwertes eine Drehmomentübertragung über den Energiespeicher zwischen dem antriebsseitigen Übertragungselement und dem abtriebsseitigen Übertragungselement der Lüfterantriebs-Übertragungseinrichtung zur Verfügung. Für die Übertragung von über diesen vorbestimmten Momentenwert hinaus gehenden Drehmomenten, bei welchen sich eingeleitete Torsionsschwingungen prinzipbedingt kaum noch auf das Laufverhalten des Lüfters auswirken, findet der zumindest eine Energiespeicher der Dämpfungseinrichtung Unterstützung durch eine ebenfalls der Dämpfungseinrichtung zugeordnete Drehsicherung, indem zumindest ein dieser Drehsicherung zugehörendes Anschlagelement bei Verformung des wenigstens einen Energiespeichers eine Auslenkung aus einer Neutralposition erfährt, bis es, beginnend mit dem Erreichen des vorbestimmten Momentenwertes, in Wirkverbindung mit zumindest einem Verdrehanschlag gelangt. Solange das vom Antrieb stammende Drehmoment nicht mehr unter den vorbestimmten Momentenwert absinkt, wird dieses Drehmoment unter Umgehung des wenigstens einen Energiespeichers unmittelbar vom antriebsseitigen Übertragungselement der Lüfterantriebs-Übertragungseinrichtung auf deren abtriebsseitiges Übertragungselement und von dort aus auf die Lüfterkupplung geleitet. Verständlicherweise wird hierdurch der wenigstens eine Energiespeicher vor Schädigung oder gar Zerstörung infolge einer Überlast geschützt, und dennoch für die Übertragung des am Lüfter benötigten Drehmomentes gesorgt.

Mit Vorzug ist das antriebsseitige Übertragungselement der Lüfterantriebs-Übertragungseinrichtung über eine erste Lagerung in einem Lagerauge eines Trägerarmes gelagert, welcher für eine ortsfeste Aufnahme der Lüfterantriebs-Übertragungseinrichtung in Bezug zum Antrieb durch Zentrierung des antriebsseitigen Übertragungselementes in dem Lagerauge sorgt. Bei Ausbildung der ersten Lagerung als Wälzlager ist für eine reibungsarme Relativbewegbarkeit des antriebseitigen Übertragungselementes gegenüber dem Lagerauge des Trägerarmes in Umfangsrichtung gesorgt, wobei der Lagerung gleichzeitig Axialsicherungen zugeordnet sein können, um auf diese Weise das antriebsseitige Übertragungselement auch axial zu fixieren.

Gegenüber dem antriebsseitigen Übertragungselement ist vorzugsweise das abtriebsseitige Übertragungselement zentriert und axial fixiert, indem zwischen den beiden Übertragungselementen eine zweite Lagerung vorgesehen ist, die zugunsten geringen Bauraumbedarfs sowie niedriger Kosten mit zumindest einem Gleitlagerelement ausgebildet sein kann. Bei im Wesentlichen L-förmiger Querschnittsausbildung dieses wenigstens einen Gleitlagerelementes wird gleichermaßen die radiale Positionierung und die axiale Fixierung des abtriebsseitigen Übertragungselementes gegenüber dem antriebsseitigen Übertragungselement sichergestellt.

Wie bereits erwähnt, ist mit Vorzug der wenigstens eine Energiespeicher der Dämpfungseinrichtung bei Ausbildung als Spiralfeder mit einem Federende am antriebsseitigen Übertragungselement und mit dem anderen Federende am abtriebsseitigen Übertragungselement befestigt. Diese Federenden greifen jeweils in Aufnahmeaussparungen je einer Federendenaufnahme ein, und sind auf diese Weise bezüglich der Befestigung am jeweiligen Übertragungselement sauber positioniert. Unerwünschte Relativdrehbewegungen der Federenden in Bezug zur Federendenaufnahme, beispielsweise durch Anpressen des jeweiligen Federendes durch ein zugeordnetes Befestigungselement an das jeweilige Übertragungselement, sind auf diese Weise wirksam ausgeschlossen.

Schließlich bleibt festzuhalten, dass an der erfindungsgemäßen Lüfterantriebs-Übertragungseinrichtung auch Dichtungsmaßnahmen vorgesehen sind, um ein unerwünschtes Eindringen von Staubpartikeln in Bereiche, bei denen eine Relativbewegung zwischen antriebs- und abtriebsseitigem Übertragungselement besteht, wirksam zu verhindern. Insbesondere wird hierbei auf Deckbleche verwiesen, welche eine Umhüllung für die Dämpfungseinrichtung bilden, also für drehmomentübertragende Teile der Lüfterantriebs-Übertragungseinrichtung. Weiterhin kann eine Abdichtung radial außerhalb der vorgenannten zweiten Lagerung zwischen Bauteilen des antriebs- und des abtriebsseitigen Übertragungselementes angeordnet sein, um diese Lagerung vor einem Zutritt von Staubpartikeln zu schützen, was insbesondere bei Ausbildung dieser Lagerung durch zumindest ein Gleitlagerelement von wesentlicher, da verschleißmindernder, Bedeutung ist. Zum Schutz der vorgenannten Abdichtung gegen Einflüsse aus dem Bereich des Antriebs des Kraftfahrzeuges ist dieser Abdichtung wirkungsmäßig eine mit Vorzug berührungsfreie Dichtung zwischen einer Axialverlängerung am Trägerarm und einer Radialaufweitung am abtriebseitigen Übertragungselement zugeordnet. Zur Bildung dieser berührungsfreien Dichtung kann die Radialaufweitung bis auf die Breite eines Spaltes an die Axialverlängerung radial angenähert sein.

Die Erfindung ist anhand von Ausführungsbeispielen näher erläutert.

Es zeigt:
- Figur 1: ein Prinzipschaltbild mit einer Lüfterantriebs-Übertragungseinrichtung, einem derselben zugeordneten Antrieb sowie einem derselben ebenfalls zugeordneten Abtrieb, jeweils in schematischer Darstellung;
- Figur 2: eine Schnittdarstellung durch die Lüfterantriebs-Übertragungseinrichtung mit Darstellung eines antriebsseitigen Übertragungselementes sowie eines relativ dazu drehbaren abtriebsseitigen Übertragungselementes, sowie einer Dämpfungseinrichtung mit einem Energiespeicher und einer Drehsicherung;
- Figur 3: einen Ausschnitt der in Fig. 2 gezeigten Lüfterantriebs-Übertragungseinrichtung gemäß einer anderen Schnittlinie zur Darstellung einer Befestigungsstelle für den Energiespeicher;
- Figur 4: eine Draufsicht auf die Lüfterantriebs-Übertragungseinrichtung mit in Fig. 2 gezeigter Blickrichtung A bei entferntem von der Abtriebsseite abgewandten Deckblech;
- Figur 5: wie Fig. 4, aber in räumlicher Darstellung;
- Figur 6: eine Darstellung der Lüfterantriebs-Übertragungseinrichtung aus der in Fig. 2 gezeigten Blickrichtung B, unter Verzicht auf das der Abtriebsseite zugewandte Deckblech zur Darstellung der Drehsicherung in einer Neutralposition;
- Figur 7: wie Fig. 6, aber mit Darstellung der Drehsicherung in Anschlagposition.

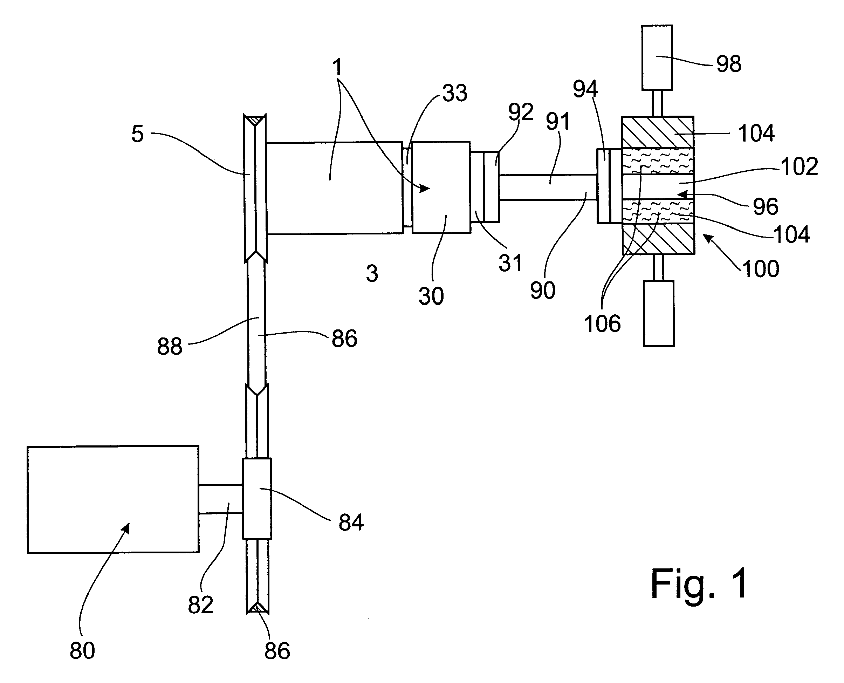

Fig. 1 zeigt in schematischer Darstellung eine Lüfterantriebs-Übertragungseinrichtung 1 in Verbindung mit einem Antrieb 80, wie beispielsweise einer Kurbelwelle 82 einer Brennkraftmaschine, und einem Abtrieb 100, wie beispielsweise einem Lüfter 98. Mit der Kurbelwelle 82 ist eine Riemenscheibe 84 drehfest verbunden, die mittels eines Riemens 86 mit einer Riemenscheibe 5 eines antriebsseitigen Übertragungselementes 3 der Lüfterantriebs-Übertragungseinrichtung 1 in Drehverbindung steht. Durch die Riemenscheiben 5 und 84 sowie den Riemen 86 wird ein Riementrieb 88 gebildet.

Das antriebsseitige Übertragungselement 3 steht über eine Dämpfungseinrichtung 33 in umfangsseitiger Wirkverbindung mit einem abtriebsseitigen Übertragungselement 30, das zur Herstellung einer Drehverbindung mit einer Zwischenwelle 90 einen Wellenadapter 31 aufweist. Die Zwischenwelle 91 ist mittels eines antriebsseitigen Flansches 92 mit dem Wellenadapter 31 drehverbunden, und mittels eines abtriebsseitigen Flansches 94 mit einer Antriebsseite 102 einer den Lüfter 98 aufnehmenden Lüfterkupplung 96.

Die Antriebsseite 102 der Lüfterkupplung 96 steht über eine Arbeitskammer 106 mit einer Abtriebsseite 104 der Lüfterkupplung 96 in Wirkverbindung. Die Arbeitskammer 106 ist zur Übertragung des eingeleiteten Drehmomentes auf den Lüfter 98 mit einem viskosem Fluid befüllt, wobei über den Befüllungsgrad der Arbeitskammer 106 der Anteil des Drehmomentes eingestellt werden kann, der von der Antriebsseite 102 der Lüfterkupplung 96 auf deren Abtriebsseite 104 und damit auf den Lüfter 98 übertragen wird. Bei nahezu entleerter Arbeitskammer 106 findet kaum eine Übertragung von Drehmoment statt, so dass der Lüfter 98 zumindest im wesentlichen antriebslos der Bewegung der Antriebsseite 102 der Lüfterkupplung 96 nachgeschleppt wird, während bei befüllter Arbeitskammer 106 der maximale Anteil des eingeleiteten Drehmomentes auf die Abtriebsseite 104 gelangt. Zwischen diesen beiden Extremen sind selbstverständlich unterschiedlichste Füllungsgrade der Arbeitskammer 106 und damit unterschiedlichste Anteile der Übertragung des eingeleiteten Drehmomentes möglich. Beispielhaft sei auf die DE 44 13 997 A1 verwiesen, in welcher eine derartige Lüfterkupplung behandelt ist.

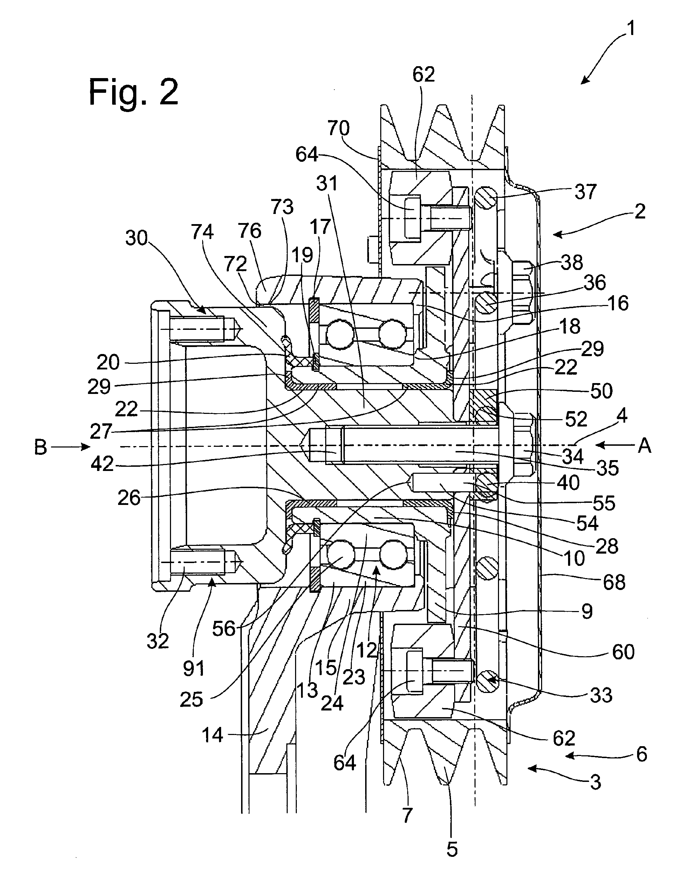

Die Fig. 2 zeigt die in Fig. 1 lediglich schematisch dargestellte Lüfterantriebs-Übertragungseinrichtung 1 in Schnittdarstellung, wonach das antriebsseitige Übertragungselement 3, das zumindest im wesentlichen konzentrisch hierzu vorgesehene abtriebsseitige Übertragungselement 30 sowie die die beiden Übertragungselemente 3, 30 miteinander wirkverbindende Dämpfungseinrichtung 33 jeweils um eine gemeinsame Drehachse 4 drehbar angeordnet sind.

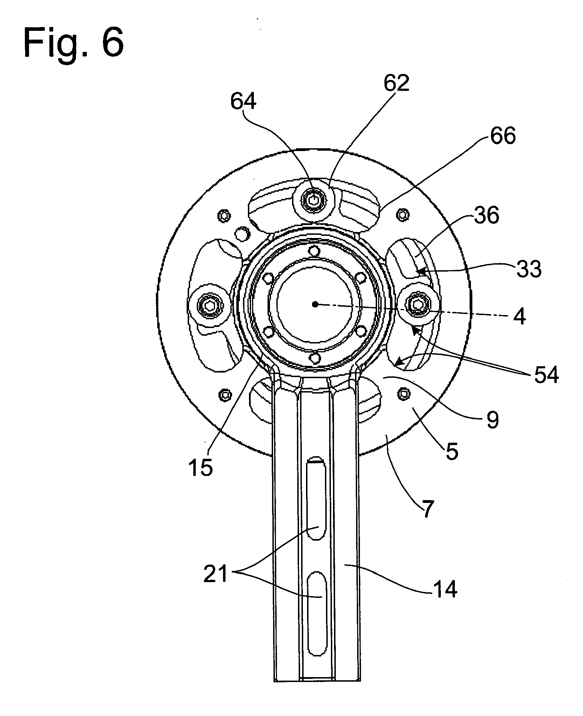

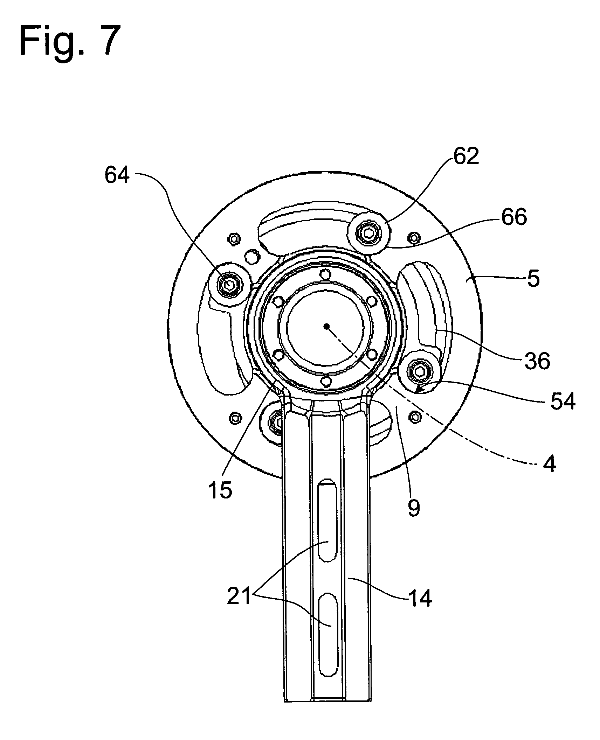

Die Riemenscheibe 5 des antriebsseitigen Übertragungselementes 3 verfügt im radialen Umfangsbereich über einen Riementragkörper 7, der zur Aufnahme des in Fig. 1 schematisch dargestellten Riemens 86 dient. Gemäß Fig. 6 oder 7 ist der Riementragkörper 7 einstückig mit einem Riemenscheibenflansch 9 ausgebildet, von welchem der radial innere Bereich am besten in Fig. 2 erkennbar ist. Der Riemenscheibenflansch 9 geht radial innen einstückig in eine Riemenscheibennabe 10 über, die sich, ausgehend vom Riemenscheibenflansch 9, zumindest im wesentlichen axial erstreckt, und zwar in Richtung zu einer Radialaufweitung 74 des Wellenadapters 31. Bevor im einzelnen der weitere konstruktive Aufbau der Lüfterantriebs-Übertragungseinrichtung 1 beschrieben wird, soll darauf hingewiesen werden, dass der Wellenadapter 31 an der Seite einer Radialaufweitung 74 dem Abtrieb 100 zugewandt ist, und zur Aufnahme des Flansches 92 der Zwischenwelle 90 (Fig. 1) über eine Mehrzahl von Aufnahmen 32 verfügt, in welche nicht gezeigte Befestigungselemente, beispielsweise Schrauben, eingeführt werden können. Entsprechend sind, wie in Fig. 2 erkennbar, die Aufnahmen 32 als Sacklochbohrungen mit Gewinde ausgebildet.

Zurückkommend auf die Riemenscheibe 5, ist diese über die radiale Außenseite der bereits erwähnten Riemenscheibennabe 10 zur Aufnahme einer ersten Lagerung 12 und mit der radialen Innenseite der Riemenscheibennabe 10 zur Aufnahme einer zweiten Lagerung 22 bestimmt. Die erste Lagerung 12 ist durch ein Wälzlager 13 in Form eines Doppelschrägkugellagers realisiert, das mit einem radial äußeren Lagerring 23 in einem Lagerauge 15 eines Kupplungsträgers 14 aufgenommen ist, und über Wälzkörper 25 mit einem radial inneren Lagerring 24 in Wirkverbindung steht, wobei der radial innere Lagerring 24 die Riemenscheibennabe 10 aufnimmt. Zum Kupplungsträger 14 bleibt zu ergänzen, dass dieser, wie insbesondere die Fig. 6 und 7 erkennen lassen, die Form eines Trägerarmes aufweist, der in Erstreckungsrichtung verstellbar ortsfest im Kraftfahrzeug aufgenommen ist. Die Verstellbarkeit wird durch Langlöcher 21 ermöglicht, welche von nicht gezeigten Befestigungselementen durchgriffen sind, wobei der Verstellvorgang in Achsrichtung lediglich dann möglich ist, wenn die nicht gezeigten Befestigungselemente gelockert sind.

Das Lagerauge 15 des Kupplungsträgers 14 ist an seiner vom Abtrieb 100 abgewandten Seite mit einer angeformten Axialsicherung 16 für den radial äußeren Lagerring 23 der ersten Lagerung 12 versehen, während dieser Lagerring 23 in entgegengesetzter Richtung mit einer Axialsicherung 17 in Form eines radial in das Lagerauge 15 eingreifenden Sprengringes gesichert ist. Ebenso ist der radial innere Lagerring 24 der ersten Lagerung 12 radial innen an der vom Abtrieb 100 abgewandten Seite durch eine an der Riemenscheibennabe 10 angeformte Axialsicherung 18 axial positioniert, an der dem Abtrieb 100 zugewandten Seite dagegen durch eine Axialsicherung 19, die durch einen in die Riemenscheibennabe 10 eingelassenen Sprengring gebildet ist. Auf diese Weise ist die erste Lagerung 12 sowohl gegenüber dem Lagerauge 15 und damit gegenüber dem Kupplungsträger 14 als auch gegenüber der Riemenscheibennabe 10 und damit gegenüber der Riemenscheibe 5 axial positioniert, so dass, da diese Lagerung 12 aufgrund ihrer Ausbildung als Doppelschrägkugellager auch im Wälzkörperbereich Axialkräfte übertragen kann, nicht nur die radiale Positionierung der Riemenscheibe 5 gegenüber dem Kupplungsträger 14 sichergestellt ist, sondern darüber hinaus auch deren axiale Fixierung.

Die bereits erwähnte zweite Lagerung 22 an der radialen Innenseite der Riemenscheibennabe 10 verfügt vorzugsweise über zwei Gleitlagerelemente 26, 28, die, jeweils im Querschnitt gesehen, mit je einem Axialschenkel 27 und je einem Radialschenkel 29 ausgebildet ist, wobei die beiden Schenkel 27, 29 im wesentlichen senkrecht zueinander stehen, und somit die Gleitlagerelemente 26, 28 im Querschnitt im wesentlichen L-förmig ausgebildet sind. Aufgrund dieser speziellen Gestaltung der Gleitlagerelemente 26, 28 vermag die Riemenscheibennabe 10 den Wellenadapter 31 in Radialrichtung zu zentrieren und in Achsrichtung zu fixieren. Das antriebsseitige Gleitlagerelement 28 stützt sich hierbei mit seinem Radialschenkel 29 axial an einem zumindest im wesentlichen ringförmigen Anschlagträger 60 ab, auf welchen zu einem späteren Zeitpunkt noch zurückgekommen wird. Das abtriebsseitige Gleitlagerelement 26 kommt dagegen mit seinem Radialschenkel 29 an der Radialaufweitung 74 des Wellenadapters 31 zur Anlage.

Radial außerhalb des abtriebsseitigen Gleitlagerelementes 26 befindet sich, axial zwischen der Radialaufweitung 74 des Wellenadapters 31 und der Axialsicherung 19, eine Abdichtung 20, durch welche die zweite Lagerung 22 vor eindringenden Staubpartikeln geschützt werden soll. Da die Abdichtung 20 mit Vorzug aus einem Elastomer besteht, und somit vor mechanischen Beschädigungen geschützt werden sollte, ist die Radialaufweitung 74 des Wellenadapters 31 bis auf einen Spalt 72 radial an eine auf die Abtriebsseite zugerichtete Axialverlängerung 76 des Lagerauges 15 des Kupplungsträgers 14 herangeführt. Auf diese Weise entsteht eine zwischen dem Lagerauge 15 und dem Wellenadapter 31 wirksame berührungsfreie Dichtung 73.

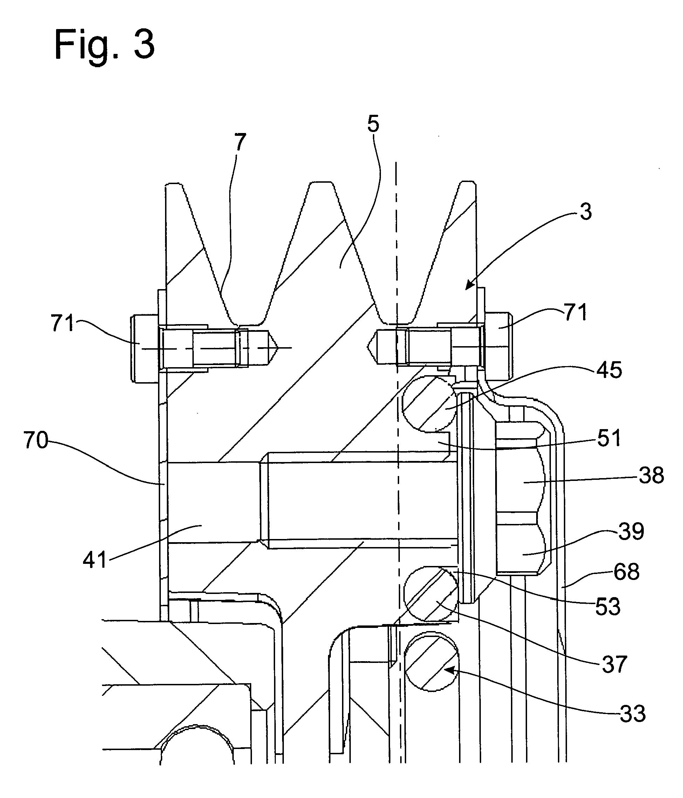

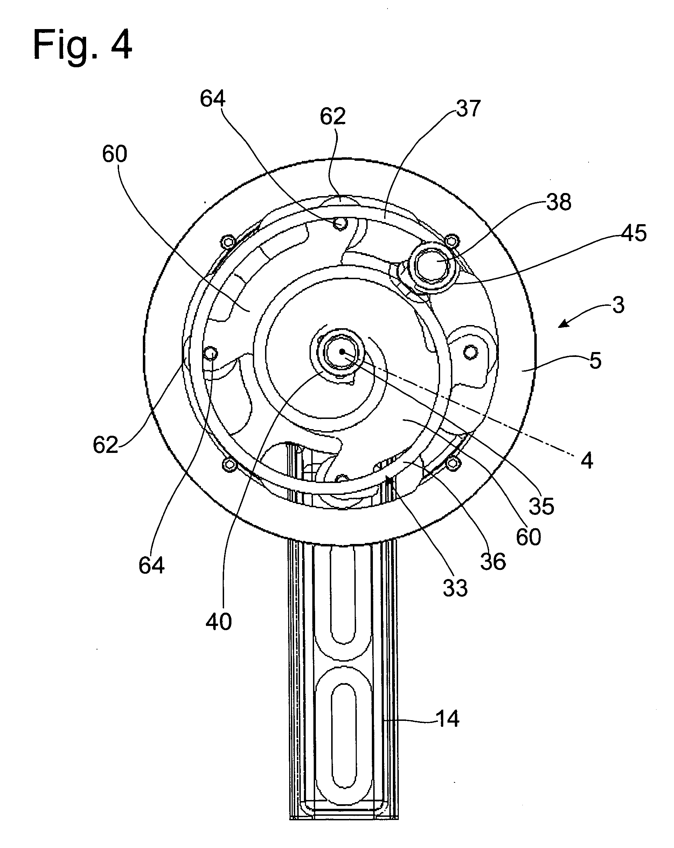

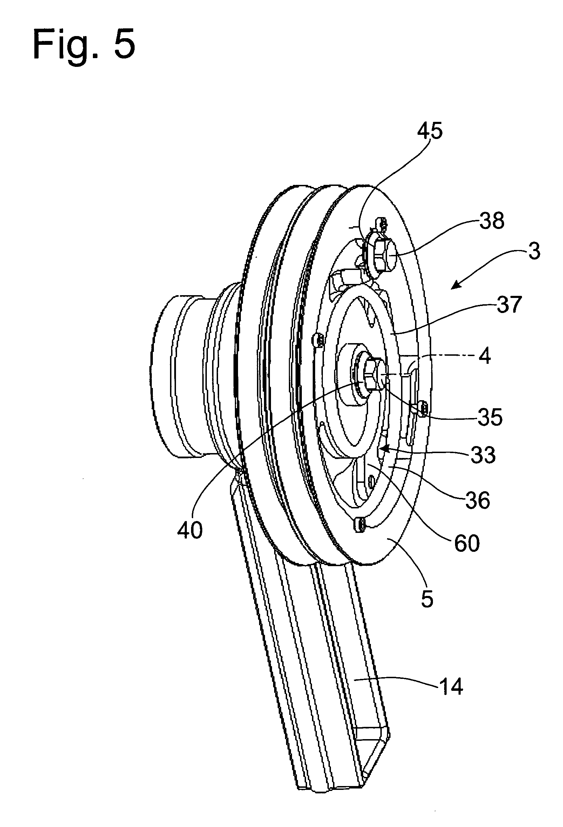

Der Wellenadapter 31 weist an seiner dem Abtrieb 100 abgewandten Seite eine zentrale Gewindebohrung 42 auf, in welche ein Befestigungselement 35 für ein abtriebsseitiges Federende eines Energiespeichers 36 der Dämpfungseinrichtung 33 eingebracht wird. Mit Vorzug ist der Energiespeicher 36 hierbei als Spiralfeder 37 ausgebildet, wobei diese Spiralfeder 37 zugunsten einer hohen Reibungsarmut und damit eines guten Entkopplungsverhaltens im wesentlichen ohne Kontakt der einzelnen Spiralwindungen zueinander eingebaut sein sollte. Besonders anschaulich ist der Energiespeicher 36 und damit die Spiralfeder 37 den Fig. 4 oder 5 entnehmbar, welche aus der in Fig. 2 abgebildeten Blickrichtung A auf die Lüfterantriebs-Übertragungseinrichtung 1 dargestellt sind, allerdings jeweils nach Abnahme eines in Fig. 2 erkennbaren, von der Abtriebsseite abgewandten Deckbleches 68, das, ebenso wie ein der Abtriebsseite zugewandtes Deckblech 70, gemäß Darstellung in Fig. 3 über Befestigungsmittel 71 am Riementragkörper 7 befestigt ist.

Wie die Fig. 2 in Verbindung mit den Fig. 4 oder 5 erkennen lässt, ist das abtriebsseitige Federende 40 der Spiralfeder 37 in einer Aufnahmeaussparung 52 einer scheibenförmigen Federendenaufnahme 50 angeordnet. Diese Federendenaufnahme 50 erstreckt sich, ausgehend vom bereits erwähnten Anschlagträger 60, in Richtung zum Kopf 34 des Befestigungselementes 35, ohne allerdings an demselben in Anlage zu kommen. Die Federendenaufnahme 50 nimmt in ihrer Aufnahmeaussparung 52 das abtriebsseitige Federende 40 der Spiralfeder 37 auf, wobei dieses Federende 40 als Federöse ausgebildet ist. Das abtriebsseitige Federende 40 ragt hierbei axial mit seiner dem Kopf 34 des Befestigungselementes 35 zugewandten Seite über die Federendenaufnahme 50 hinaus, und wird somit durch den Kopf 34 des Befestigungselementes 35 in die Aufnahmeaussparung 52 gepresst, wodurch hierdurch die Federendenaufnahme 50 in axial fester Anlage am Anschlagträger 60 gehalten ist. Auf diese Weise ist das abtriebseitige Federende 40 der Spiralfeder 37 gesichert gegen Relativverdrehungen gegenüber dem Befestigungselement 35 positioniert. Eine ähnliche Konstruktion dient zur Aufnahme des antriebsseitigen Federendes 45, wobei dieses Federende 45 der Spiralfeder 37 ebenfalls in Form einer Federöse ausgebildet ist, und in eine Aufnahmeaussparung 53 einer Federendenaufnahme 51 eingesetzt ist. Zur Darstellung dieses antriebsseitigen Federendes 45 wird auf die Fig. 3 verwiesen, bei welcher ein anderer Schnitt als in Fig. 2 gewählt ist. Abweichend von Fig. 2 ist die in Fig. 3 mit der Bezugsziffer 51 versehene Federendenaufnahme in den Riementragkörper 7 integriert. In vergleichbarer Weise wie das bereits beschriebene abtriebsseitige Federende 40 wird gemäß Fig. 3 das antriebsseitige Federende 45 in die zugeordnete Aufnahmeaussparung 53 der Federendenaufnahme 51 eingesetzt und durch einen Kopf 39 eines Befestigungselementes 38 fixiert. Dieses Befestigungselement 38 ist in eine Durchgangsbohrung 41 eingeführt. Das antriebsseitig angeordnete Befestigungselement 38 bildet ein erstes Befestigungselement, das abtriebsseitig angeordnete Befestigungselement 35 dagegen ein zweites Befestigungselement.

Die den Energiespeicher 36 aufweisende Dämpfungseinrichtung 33 weist weiterhin eine Drehsicherung 54 auf, die nachfolgend beschrieben werden soll, und die antriebsseitig mit Anschlagelementen 66 und abtriebsseitig mit Verdrehanschlägen 62 ausgebildet ist. Beginnend mit den am besten in Fig. 6 oder 7 erkennbaren Anschlagelementen 66, sind diese jeweils umfangsseitig an dem Riemenscheibenflansch 9 angeformt, und zwar jeweils an dessen je einem Verdrehanschlag 62 zugewandter Umfangsseite. Jeder dieser Verdrehanschläge 62 ist jeweils über Befestigungsmittel 64 an dem Anschlagträger 60 befestigt, und zwar, wie insbesondere der Fig. 4 in klarer Darstellung entnommen werden kann, im Bereich von dessen Außenumfang, wobei die Verdrehanschläge 62 jeweils walzenförmig ausgebildet sind.

Die Anschlagelemente 66 sollen, jeweils ausgehend von einer in Fig. 6 gezeigten Neutralposition, nach Auslenkung der Riemenscheibe 5 gegenüber dem Wellenadapter 31 um einen vorbestimmten Drehwinkel in Antriebsrichtung und einer damit einher gehenden, vorbestimmt starken elastischen Verformung des Energiespeichers 36, also der Spiralfeder 37, eine weitergehende Relativauslenkung in dieser Bewegungsrichtung begrenzen. Diese Begrenzung der Relativauslenkung erfolgt, wie Fig. 7 zeigt, sobald die Anschlagelemente 66 den jeweils zugeordneten Verdrehanschlag 62 erreicht haben, und beginnen, unter Überbrückung des Energiespeichers 36 ein über die Riemenscheibe 5 eingeleitetes Drehmoment unmittelbar auf die Verdrehanschläge 62 zu übertragen, wodurch diese wiederum eine Auslenkung des Anschlagträgers 60 um die Drehachse 4 unter Mitnahme des mit dem Anschlagträger 60 drehfesten Wellenadapters 31 (Fig. 2) auslösen. Wie Fig. 2 im einzelnen zeigt, ist nämlich der Anschlagträger 60 drehfest mit dem Wellenadapter 31 verbunden, wobei diese drehfeste Verbindung durch eine Mehrzahl von Sicherungsstiften 55 gebildet wird, die in jeweils eine zugeordnete Sicherungsausnehmung 56 des Wellenadapters 31 eingeführt sind.

Der Grund für eine Überbrückung des Energiespeichers 36 durch die Drehsicherung 54 ab einem vorbestimmten Momentenwert eines durch die Dämpfungseinrichtung 33 zu übertragenden Drehmomentes liegt darin, dass dem Energiespeicher 36 durch Ausbildung als Spiralfeder 37 eine geringe Steifigkeit in Umfangsrichtung zugrunde liegt, um eingeleitete Torsionsschwingungen, sofern diese einem lediglich geringen Drehmoment, das unterhalb des vorbestimmten Momentenwertes verbleibt, überlagert sind, mit gutem Entkopplungsvermögen hervorragend verarbeiten zu können. Derart geringe Drehmomente werden üblicherweise an die der Lüfterantriebs-Übertragungseinrichtung 1 nachgeordnete Lüfterkupplung 96 (Fig. 1) übertragen, wenn kein Betrieb des Lüfters 98 gewünscht ist, und dieser somit lediglich mitgeschleppt wird. Um bei deutlich ansteigenden Drehmomenten ein immer stärkeres Auslenken der Übertragungselemente 3, 30 relativ zueinander und damit eine immer weiter zunehmende Verformung der Spiralfeder 37 wirksam ausschließen zu können, wird, sobald eine Auslenkung der Anschlagelemente 66 aus ihrer in Fig. 6 eingezeichneten Neutralposition in die in Fig. 7 gezeigte Endposition erfolgt ist, bei welcher zu übertragende Drehmomente zumindest den vorbestimmten Momentenwert erreicht haben, die Drehsicherung 54 aktiviert, und damit eine weitere Relativauslenkung der Übertragungselemente 3, 30 zueinander vermieden. Hierdurch wird die nun überbrückte Spiralfeder 37 vor einer Überlastung und damit vor übermäßiger Verformung bewahrt.

### Bezugszeichenliste

- 1: Lüfterantriebs-Übertragungseinrichtung
- 3: antriebsseitiges Übertragungselement
- 4: Drehachse
- 5: Riemenscheibe
- 7: Riemenkörper
- 9: Riemenscheibenflansch
- 10: Riemenscheibennabe
- 12: erste Lagerung
- 13: Wälzlager
- 14: Kupplungsträger
- 15: Lagerauge
- 16,17,18,19: Axialsicherung
- 20: Abdichtung
- 21: Langlöcher
- 22: zweite Lagerung
- 23: radial äußerer Lagerring
- 24: radial innerer Lagerring
- 25: Wälzkörper
- 26,28: Gleitlagerelemente
- 27: Axialschenkel
- 29: Radialschenkel
- 30: abtriebsseitiges Übertragungselement
- 31: Wellenadapter
- 32: Aufnahmen für Befestigungsmittel
- 33: Dämpfungseinrichtung
- 34: Kopf
- 35: erstes Befestigungselement
- 36: Energiespeicher
- 37: Spiralfeder
- 38: zweites Befestigungselement
- 39: Kopf
- 40: abtriebsseitiges Federende
- 41: Durchgangsbohrung
- 42: Gewindebohrung
- 45: antriebsseitiges Federende
- 50,51: Federendenaufnahme
- 52,53: Aufnahmeaussparung
- 54: Drehsicherung
- 55: Sicherungsstift
- 56: Sicherungsausnehmung
- 60: Anschlagträger
- 62: Verdrehanschlag
- 64: Befestigungsmittel
- 66: Anschlagelemente
- 68,70: Deckbleche
- 71: Befestigungsmittel
- 72: Spalt
- 73: berührungsfreie Dichtung
- 74: Radialaufweitung
- 76: Axialverlängerung
- 80: Antrieb
- 82: Kurbelwelle
- 84: Riemenscheibe
- 86: Riemen
- 88: Riementrieb
- 90: Zwischenwelle
- 91: Ausgang
- 92,94: Flansch
- 96: Lüfterkupplung
- 98: Lüfter
- 100: Abtrieb
- 102: Antriebsseite
- 104: Abtriebsseite
- 106: Arbeitskammer

## Patentansprüche

1. Lüfterantriebs-Übertragungseinrichtung für einen Lüfter (98) in einem Kraftfahrzeug, aufgenommen an einem Kupplungsträger (14) und aufweisend eine als Eingang (6) dienende Riemenscheibe (5) zur Aufnahme eines von einem Antrieb (80) gelieferten Drehmomentes sowie einen als Ausgang (91) zum Lüfter (98) dienenden Wellenadapter (31),
**dadurch gekennzeichnet,**
**dass** dem Eingang (6) ein antriebsseitiges Übertragungselement (3) und dem Ausgang (91) ein abtriebsseitiges Übertragungselement (91) zugeordnet ist, die in Umfangsrichtung über eine Dämpfungseinrichtung (33) miteinander in Wirkverbindung stehen, wobei der Dämpfungseinrichtung (33) zumindest ein Energiespeicher (36) und wenigstens eine Drehsicherung (54) mit zumindest einem Anschlagelement (66) und wenigstens jeweils einem Verdrehanschlag (62) zugewiesen sind, von denen der Energiespeicher (36) bis zum Erreichen eines vorbestimmten Drehmomentes für eine Übertragung eines vom Antrieb (80) gelieferten Drehmomentes zwischen den Übertragungselementen (3, 30) vorgesehen ist, während bei Überschreitung dieses vorbestimmten Drehmomentes eine Überbrückung des Energiespeichers (36) und damit eine elastizitätsfreie Verbindung der Übertragungselemente (3, 30) untereinander mittels der Drehsicherung (54) ausgelöst wird, indem das jeweilige Anschlagelement (66) eine Mitnahme des jeweiligen Verdrehanschlages (62) im wesentlichen ohne Relativbewegung bewirkt.

2. Lüfterantriebs-Übertragungseinrichtung nach Anspruch 1,
**dadurch gekennzeichnet,**
**dass** der Energiespeicher (36) als Spiralfeder (37) mit einem abtriebsseitigen Federende (45) und einem abtriebsseitigen Federende (40) ausgebildet ist, von denen das abtriebsseitige Federende (45) an dem antriebsseitigen Übertragungselement (3) und das abtriebsseitige Federende (40) an dem abtriebsseitigen Übertragungselement (30) befestigt ist.

3. Lüfterantriebs-Übertragungseinrichtung nach Anspruch 2,
**dadurch gekennzeichnet,**
**dass** die Spiralfeder (37) mit ihrem abtriebsseitigen Federende (40) in eine Aufnahmeaussparung (52) einer Federendenaufnahme (50) des abtriebsseitigen Übertragungselementes (30) eingelegt und durch ein erstes Befestigungselement (35) an dem abtriebsseitigen Übertragungselement (30) befestigt ist, während die Spiralfeder (37) mit ihrem abtriebsseitigen Federende (45) in eine Aufnahmeaussparung (53) einer Federendenaufnahme (51) des antriebsseitigen Übertragungselementes (3) eingelegt und durch ein zweites Befestigungselement (38) an dem antriebsseitigen Übertragungselement (3) befestigt ist.

4. Lüfterantriebs-Übertragungseinrichtung nach Anspruch 2 oder 3,
**dadurch gekennzeichnet,**
**dass** die einzelnen Windungen der Spiralfeder (37) mit einem radialen Abstand zueinander angeordnet sind, bei welchem sie unabhängig von ihrer jeweiliger Verformung innerhalb eines vom Anschlagelement (62) in Bezug zum jeweiligen Verdrehanschlag (66) zugelassenen Verformungsbereiches keinen Berührungskontakt zueinander finden.

5. Lüfterantriebs-Übertragungseinrichtung nach Anspruch 1,
**dadurch gekennzeichnet,**
**dass** das zumindest eine Anschlagelement (66) in Wirkverbindung mit dem antriebsseitigen Übertragungselement (30) steht und, ausgehend von einer Neutralposition, nach Durchfahren eines vorbestimmten Drehwinkels in einer vorbestimmten Richtung, am zugeordneten Verdrehanschlag (62) in Anlage gelangt, welcher mit dem abtriebsseitigen Übertragungselement (30) wirkverbunden ist.

6. Lüfterantriebs-Übertragungseinrichtung nach Anspruch 5,
**dadurch gekennzeichnet,**
**dass** das jeweilige Anschlagelement (66) an zumindest einem Riemenscheibenflansch (9) der Riemenscheibe (5) vorgesehen ist, während der zugeordnete Verdrehanschlag (62) an einem Anschlagträger (60) aufgenommen ist, der in Umfangsrichtung in Wirkverbindung mit einem Wellenadapter (31) des abtriebsseitigen Übertragungselementes (30) steht.

7. Lüfterantriebs-Übertragungseinrichtung nach Anspruch 5 oder 6,
**dadurch gekennzeichnet,**
**dass** das jeweilige Anschlagelement (66) an seiner dem dem jeweils zugeordneten Verdrehanschlag (62) zugewandten Seite mit einer Krümmung ausgebildet ist, welche an die Krümmung des Verdrehanschlages (62) angepasst ist.

8. Lüfterantriebs-Übertragungseinrichtung nach Anspruch 7,
**dadurch gekennzeichnet,**
**dass** der Verdrehanschlag (62) jeweils walzenförmig ausgebildet und über ein Befestigungsmittel (64) am Anschlagträger (60) befestigt ist.

9. Lüfterantriebs-Übertragungseinrichtung nach Anspruch 1,
**dadurch gekennzeichnet,**
**dass** die Riemenscheibe (5) über zumindest eine Riemenscheibennabe (10) und eine an der letztgenannten aufgenommene erste Lagerung (12) in einem Lagerauge (15) des Kupplungsträgers (14) aufgenommen ist.

10. Lüfterantriebs-Übertragungseinrichtung nach Anspruch 6 oder 9,
**dadurch gekennzeichnet,**
**dass** die zumindest eine Riemenscheibennabe (10) der Riemenscheibe (5) an dem wenigstens einen Riemenscheibenflansch (9) vorgesehen ist, der seinerseits den Riemenkörper (7) der Riemenscheibe (5) trägt.

11. Lüfterantriebs-Übertragungseinrichtung nach Anspruch 9,
**dadurch gekennzeichnet,**
**dass** die zwischen dem Lagerauge (15) des Kupplungsträgers (14) und der Riemenscheibennabe (10) der Riemenscheibe (5) aufgenommene erste Lagerung (12) mittels Axialsicherungen (16 bis 19) eine axiale Fixierung der Riemenscheibe (5) gegenüber dem Kupplungsträger (14) bewirkt.

12. Lüfterantriebs-Übertragungseinrichtung nach Anspruch 11,
**dadurch gekennzeichnet,**
**dass** die erste Lagerung (12) als Wälzlager (13) mit einem radial äußeren Lagerring (23), einem radial inneren Lagerring (24) und radial zwischen den beiden Lagerringen (23 und 24) angeordneten Wälzkörpern (25) ausgebildet ist, wobei der radial äußere Lagerring (23) über die Axialsicherungen (16, 17) gegenüber dem Lagerauge (15) des Kupplungsträgers (14) und der radial innere Lagerring (24) über die Axialsicherungen (18, 19) an der Riemenscheibennabe (10) der Riemenscheibe (5) axial gesichert aufgenommen ist.

13. Lüfterantriebs-Übertragungseinrichtung nach Anspruch 6 oder 9,
**dadurch gekennzeichnet,**
**dass** die zumindest eine Riemenscheibennabe (10) der Riemenscheibe (5) über eine zweite Lagerung (22) zur Aufnahme des Wellenadapters (31) dient.

14. Lüfterantriebs-Übertragungseinrichtung nach Anspruch 13,
**dadurch gekennzeichnet,**
**dass** die zweite Lagerung (22) mit wenigstens einem Gleitlagerelement (26, 28) versehen ist, das zur Zentrierung des Wellenadapters (31) gegenüber der Riemenscheibennabe (10) über einen Axialschenkel (27) und zur axialen Fixierung des Wellenadapters (31) gegenüber der Riemenscheibennabe (10) über einen Radialschenkel (29) verfügt.

15. Lüfterantriebs-Übertragungseinrichtung nach Anspruch 14,
**dadurch gekennzeichnet,**
**dass** der Axialschenkel (27) und der Radialschenkel (29) des wenigstens einen Gleitlagerelementes (26, 28) zur Bildung eines zumindest im wesentlichen L-förmigen Querschnittes wenigstens näherungsweise senkrecht zueinander angeordnet sind.

16. Lüfterantriebs-Übertragungseinrichtung nach einem der Ansprüche 9 bis 15,
**dadurch gekennzeichnet,**
**dass** der Wellenadapter (31) über eine Radialaufweitung (74) verfügt, welche bis auf die Breite eines Spaltes (72) an eine Axialverlängerung (76) des Lagerauges (15) des Kupplungsträgers (14) herangeführt ist, so dass eine berührungsfreie Dichtung (73) zum Schutz der ersten Lagerung (12) gegen grobe Verunreinigungen entsteht.

17. Lüfterantriebs-Übertragungseinrichtung nach Anspruch 16,
**dadurch gekennzeichnet,**
**dass** der berührungsfreien Dichtung (73) eine zwischen der Riemenscheibennabe (10) und der Radialaufweitung (74) des Wellenadapters (31) angeordnete Abdichtung (20) zum Schutz der zweiten Lagerung (22) gegen feine Verunreinigungen zugeordnet ist.

18. Lüfterantriebs-Übertragungseinrichtung nach einem der Ansprüche 1 bis 8,
**dadurch gekennzeichnet,**
**dass** die Riemenscheibe (5) zum Schutz der Dämpfungseinrichtung (33) vor Verschmutzung beidseits mit Deckblechen (68, 70) verkleidet ist.
